Europäisches Patentamt

**European Patent Office**

**Office européen des brevets**

(19)

(11) Publication number:

**0 232 936**
A2

(12) **EUROPEAN PATENT APPLICATION**

(21) Application number: **87200125.0**

(22) Date of filing: **27.01.87**

(51) Int. Cl.⁴: **C 09 D 5/08,** C 09 J 7/02,
C 09 J 3/12, F 16 L 58/16

(30) Priority: **28.01.86 US 823222**
**25.03.86 US 843943**

(43) Date of publication of application: **19.08.87**
**Bulletin 87/34**

(84) Designated Contracting States: **AT BE DE ES FR GB GR IT NL SE**

(71) Applicant: **THE KENDALL COMPANY, One Federal Street, Boston, Ma 02101 (US)**

(72) Inventor: **Huddleston, Elwyn G., Route 6, Box 514, Franklin Kentucky 42134 (US)**

(74) Representative: **Smulders, Theodorus A.H.J. et al, Vereenigde Octrooibureaux Nieuwe Parklaan 107, NL-2587 BP 's-Gravenhage (NL)**

(54) **Anti-corrosion protecive coatings for metal surfaces.**

㊿ Novel system for providing anti-corrosion protective coatings, e.g. for metal pipes and the like, comprising: (1) a rubber-based primer coating mixture; and (2) an adhesive tape comprising a backing carrying a rubber-based adhesive coating comprising a mixture of pre-crosslinked butyl rubber and virgin rubber alone or in combination with reclaimed rubber, or a mixture of virgin rubber and/or halogenated butyl rubber alone or in combination with reclaimed rubber, the virgin and/or halogenated butyl rubber being partially cross-linked by a phenolic resin crosslinking agent, the system further including a crosslinking agent and a crosslinking activator adapted to provide an in situ crosslinking of the system after the primer coating and tape are applied.

0232936

Anti-corrosion protective coatings for metal surfaces.

The present invention relates to anti-corrosion protective coatings for metal surfaces, e.g. metal pipes that are destined for inground implantation, and more particularly, to certain improvements over the invention described and claimed in U.S. Patent No. 4,472,231 issued September 18, 1984 to Robert F. Jenkins and assigned to The Kendall Company, the assignee of the instant application.

It has previously been the practice to provide anti-corrosion protective pipe coatings by supplying, in roll form, preformed polyolefin tapes having one surface that is coated with a butyl-based adhesive comprising a mixture of both virgin butyl rubber and reclaimed butyl rubber.

U.S. Patent No. 4,268,334 issued to George M. Harris and Samuel J. Thomas discloses a method for increasing the strength of the adhesive bond in a layer comprising a blend of virgin butyl rubber and reclaimed butyl rubber comprising the step of incorporating in the butyl adhesive layer specified amounts of a p-dinitrosobenzene or p-quinone dioxime crosslinking agent and an activator such as lead oxide. As is stated in Col. 1, lines 26 et seq., the amount of crosslinking agent employed is in excess of a threshold value. However, it is stated at Col. 1, lines 24-26 that the amount of crosslinking agent has no appreciable effect upon bond strength of the tape after it has been applied to the pipe. Accordingly, no additional crosslinking of the rubber in the underlying primer or the primer-adhesive interface regions would occur subsequent to the application of the adhesive tape to the pipe itself.

The aforementioned U.S. Patent 4,472,231 of Jenkins is directed primarily to providing an improved anti-corrosion protective coating for the surface of metal pipes that are designed for inground implantation, e.g. an improvement over procedures such as are disclosed in the aforementioned U.S. Patent 4,267,334 of Harris et al.

As explained in the Jenkins patent, anti-corrosion protective coatings that are applied to inground pipeline structures are often subjected to rather severe long-term shearing forces derived from the surrounding soil.  The magnitude of these shearing forces depends upon several factors, including amongst others:   (a) the type of the soil, (b) the tectonic forces surrounding the implanted pipeline, (c) the size of the pipe, (d) the axial site emplacement and (e) the range of thermal expansion of the pipe as well as its contents.

In order to understand how each of the above factors affect the overall shear stress imparted to an inground pipeline coating, we first shall consider the forces acting upon implanted pipelines.

Frictional forces acting between the pipeline anti-corrosion protective coating and the surrounding soil are the primary source of shear stress.  Frictional forces are here defined as coating and the soil and the normal force acting around the pipe. As the coefficient of friction depends upon both the nature of the pipeline coating as well as the surrounding soil, it will be found to vary in different applications.  Olefin polymer pipeline protective coatings, such as polyethylene, or the like, inherently exhibit lower coefficients of friction, as the protective tape outer surfaces are smooth and substantially non-adherent.

Other factors having importance in these considerations are the weight of the soil above the pipe, as well as the weight of the pipe, including its contents.  In addition, since the normal force will vary depending on the axial position around the pipe diameter, the frictional force and hence the shearing force, will also be found to vary around the diameter of the pipe.

The result of long-term shear forces on a pipeline protective coating is referred to as "soil stress."  Soil stress on anti-corrosion protective coatings generally results from the structural shear forces which cause the protective coating to creep along the pipeline peripheral surface.

Creep is, in essence, a long term visco-elastic, or "cold-flow" phenomenon, common to all polymeric substances.  The amount of creep, however, will depend upon the physical properties of a coating. Since the physical properties (i.e. modulus) of a coating, will be temperature dependent, temperature becomes a decisive element in determining the amount of creep. At low temperatures, the propensity of the protective coating to creep will be substantially reduced, while at elevated temperatures, the likelihood of creep will be significantly increased, other factors remaining the same.

However, adhesive resistance to flow or creep, may be improved by introducing crosslinks between the component rubber chains.

When a rubber-based, or the like, adhesive system is crosslinked, (1) its resistance to creep is increased, (2) the overall dimensional stability is improved, and (3) it is more resistant to heat distortion. In addition, the above-listed crosslinking effects are generally intensified as the crosslink density is increased, and can therefore be controlled by adjusting the number of crosslinks in an adhesive coating. Crosslinking provides numerous anchoring points for the individual rubber chains, and these anchor points restrict excessive movement within the rubber of the adhesive, thereby resulting in limited creep or flow of the polyolefin tape coating.

As further stated in the Jenkins patent, a typical conventional pipewrap anti-corrosion protective system may comprise a primer that is applied to the pipeline outer surface, and an anti-corrosion protective adhesive tape overlaying the primer coating. The primer in the conventional pipewrap anti-corrosion system is typically a mixture of rubber and resins, which may be applied to the pipeline outer surface, by means of spraying, brushing, dipping or rugging. The adhesive tape is generally composed of a polyolefin backing material, such as polyethylene, or the like, with a rubber-based adhesive that is coated onto a surface of the polyolefin backing material. In the conventional pipewrap anti-corrosion protective system there is no crosslinking agent present in either the primer or the adhesive tape components.

According to the teachings of Jenkins, improved anti-corrosion protective coatings may be provided for metal pipes that are to be subjected to a high shear stress inground environment by what the patentee terms a two component interacting pipewrap anti-corrosion protection system consisting of : (1) a primer mixture comprising a blend of natural rubbers, resins and a crosslinking metal oxide activator coated with organo-titanate; and (2) a rubber-based adhesive carried on an olefin polymer backing to be helically wrapped over the primer layer, the adhesive layer comprising blend of virgin butyl rubber and reclaimed butyl rubber partially crosslinked with p-quinone dioxime crosslinking agent, a tackifier, and a residual amount of the p-quinone dioxime crosslinker.

The organo-titanate surface treated metal oxide, preferably lead oxide, serves primarily as a crosslinking catalyst to increase both the speed and yield of the crosslinking reaction effected by the p-quinone dioxime crosslinking agent. As is explained at the top of Col. 3 of the Jenkins patent, if the lead dioxide is not surface-treated with the organo-titanate coupling agent, the crosslinking reaction will take place at a considerably slower rate, thereby severely limiting the usefulness of the metal oxide as a crosslinking catalyst.

Initial partial crosslinking in the described two component interacting pipewrap system occurs only in the adhesive component layer. However, as the adhesive layer, containing residual unreacted p-quinone dioxime crosslinker, is placed in contact with the primer-coated pipe outer surface, a further crosslinking reaction then occurs at the primer-adhesive interface, as well as throughout the primer layer and the adhesive layer. This additional crosslinking, which is aided in part by the elevated temperature of the operating pipeline and its contents, results in an improved ability of the system to resist tape creep caused by high shear forces.

As is stated in Col. 3, the crosslinking reaction results in increasing the cohesive strength, and consequently in shear resistance, of both the adhesive and primer layers. The primer-adhesive interface zone of crosslinking following

4

application of the adhesive-coated tape to the primer-coated pipe surface results in an inter-crosslinked adhesive/primer system. An important feature is the crosslinking at the adhesive/primer interface which serves to increase markedly the adhesion of the helically wrapped tape to the primer-coated pipe, thereby reducing significantly the creep caused by high shear stress forces in situ. Further, the increase in the speed and extent of the crosslinking reaction rate results in the above-described improved anti-creep characteristics in the presence of soil shear forces.

It will be noted that the two-component system of Jenkins relies upon what the patentee describes in essence as a high speed additional crosslinking obtained by employing p-quinone dioxime as crosslinker and metal oxide, preferably lead dioxide, activator surface-treated with organo-titante. The increased speed obtained thereby was thought to be critical to the solution of the task of the invention.

While the patented system was entirely satisfactory in small-scale manufacture of an anti-corrosion pipewrap system, it nevertheless suffered from certain deficiencies making it impractical in the larger scale commercial manufacture of the system.

Specifically, it has been found that the operating conditions taught in U.S. Patent 4,472,231 do not provide a procedure which is processable in a Banbury mixer in commercial production of the adhesive. Repeated attempts to implement the teachings of the '231 patent on production equipment immediately resulted in lumpy adhesive.

The present invention is directed to the solution to this problem, i.e. to adapt the teachings of '231 to a commercially feasible continuous production run to provide a pipewrap meeting the desired shear requirements, e.g. after 48 hours conditioning at $85^{\circ}C$, the shear rate will not exceed $10^{-7}$ meters/second.

In order to solve this lumping problem, it was first necessary.to ascertain the cause of the problem. Accordingly, the present invention is in part predicated upon the recognition and clear understanding of the cause and nature of the problem;

and it is in part predicated upon the discovery of a means for obviating the problem.

As mentioned above, the present invention is in part predicated upon the discovery of the cause of the problem.  It has been discovered that this lumping is caused by the particular crosslinking agent, p-quinone dioxime, employed in the patented process.  Specifically, it has been discovered that this crosslinking agent reacts so quickly under Banbury processing conditions that there is not sufficient time for proper dispersion to avoid lumping.  Thus, while the patent teaches the use of a fast-acting crosslinking agent to increase both the speed and yield of crosslinked rubber, from the standpoint of commercial production this is not possible.

According to this invention, the problem is solved in a highly efficacious manner by employing a pre-crosslinked butyl in lieu of crosslinking in the Banbury or employing a phenolic resin crosslinking agent in the Banbury to effect the initial crosslinking.  In either case, the requisite amount of crosslinking agent is then added to effect the crosslinking in situ in the ground at some time after this initial mixing in the Banbury, e.g. prior to coating the adhesive on the backing material.

The present invention is directed to providing an anti-corrosion protective coating for the surface of tubular articles such as metal pipes and the like that are to be subjected to a high shear stress environment, which coating can be described as consisting essentially of a rubber-based primer mixture applied to the surface of the pipe and an outer, preferably helically wrapped, rubber-based adhesive tape which is partially crosslinked, the protective coating further being characterized in that additional crosslinking will occur at the primer-adhesive layer interface, as well as throughout the rest of the primer adhesive layers following overlaying of the primer surface with the adhesive tape.

This additional crosslinking has been found to provide superior resistance to creep caused by high shear forces by increasing the cohesive strength and consequently the shear resistance of both the adhesive and primer layers.

The method for providing such an anti-corrosion coating is described and claimed in U.S. Patent 4,472,231 issued to Robert F. Jenkins and assigned to The Kendall Company, the assignee of the instant application. According to this patent, the coating comprises (1) a primer mixture comprising a blend of natural rubber, resins and a metal oxide crosslinking activator; (2) an adhesive-coated tape comprising an olefin polymer backing material having a rubber-based adhesive coated on one surface thereof, the adhesive coating being a blend of virgin butyl rubber and reclaimed butyl rubber and a tackifier, the rubber being partially corsslinked in manufacture of the adhesive mixture by incorporating p-quinone dioxime crosslinking agent, a residual (or excess) amount of the p-quinone dioxime crosslinker being present in the adhesive coating.

As is described in the patent, when the adhesive tape containing residual unreacted p-quinone dioxime crosslinking agent in its adhesive coating is placed into contact with the primer-coated pipe outer surface, a further crosslinking reaction then occurs at the primer-adhesive interface zone, as well as throughout the primer layer and adhesive layer. This additional crosslinking is aided in part by the elevated temperature of the operating pipeline and its contents. The Jenkins patent anti-corrosion protective coatings that are applied to inground pipeline structures are often subjected to long-term shearing forces derived from the surrounding soil. The magnitude of these shearing forces depends upon several factors, including amongst others (a) the type of soil, (b) the tectonic forces surrounding the implanted pipeline, (c) the size of the pipe, (d) the axial site emplacement, and (e) the range of the thermal expansion of the pipe as well as the contents.

While the general concept described in this patent, namely the two-stage crosslinking wherein the latter stage occurs in situ on the inground wrapped pipe, provides and elegant pipewrap system accomplishing all of the objectives of the patentee in terms of stability, resistance to shear and creep, etc., it has manufacture the adhesive tape on the production equipment needed for large scale commercial manufacture. Repeated attempts to do so always resulted in a lumpy adhesive mixture which was totally unsatisfactory.

The primary task of the present invention, accordingly, is to modify the teachings of the '231 patent in order to provide production runs of the adhesive tape which can then be employed in the inground crosslinking system described in the patent. In this context, the present invention can be said to be directed to an improvement over the teachings of '231 to permit commercial utilization of the general concept of the patent.

As mentioned earlier, the solution to this task is in part predicated upon the recognition of the cause of this lumping and is in part predicated upon providing a way to obviate the lumping problem so as to provide, in a commercial manufacturing system, the required homogeneous dispersion of adhesive composition to be applied to the backing material to provided the adhesive tape.

It has now been ascertained that the cause of the problem is the particular crosslinker, p-quinone dioxime. While the patent suggests (Col. 3) that the initial crosslinking should occur rapidly, in point of fact it has been discovered that p-quinone dioxime will react so quickly under Banbury manufacturing conditions that there is not sufficient time for proper (homogeneous) dispersion. Accordingly, an alternative approach must be found for this initial crosslinking.

In accordance with one embodiment of the present invention, no crosslinking occurs in the Banbury. Instead, the initial crosslinking required to provide an adhesive tape is obtained by employing a partially pre-crosslinked butyl in the Banbury mix. In other words, the rubber components to be admixed with the tackifier and other ingredients in the Banbury to form a substantially homogeneous dispersion (hereinafter referred to as the "premix") will consist of a partially pre-crosslinked virgin butyl and a [non-crosslinked] virgin butyl rubber. Optionally, a portion of the virgin butyl may be, and preferably will be replaced with reclaimed butyl rubber, in which event the premix will contain a blend of partially crosslinked virgin butyl,

8

non-crosslinked virgin butyl and reclaimed butyl rubber. The resulting premix will be effectively free of any crosslinking agent. [It.is possible that the pre-crosslinked and/or reclaimed rubber may possibly contain inconsequential trace amounts of unreacted crosslinker.]

Partially crosslinked butyls are commercially available and per se comprise no part of this invention. By way of illustration, mention may be made of "Kalar", trademark of Hardman, Inc. for a virgin butyl rubber partially crosslinked to a thermoplastic rubber and then pelletized. Kalar is available in four grades, 5214, 5245, 5263 and 5264, having viscosities (Mooney ML 1+3 @ 127°C) of 50-60, 30-40, 58-68 55-65 respectively; and specific gravities @ 25°C (ASTM 471-68 Sec. 8.14) of 1.02, 1.02, 0.92 and 1.07, respectively. Other commercially available partially crosslinked butyls will also be readily suggested to the skilled worker, as would procedures for partially vulcanizing in house.

In general, the degree of partial crosslinking of the butyl rubber prior to mixing with the other components in the Banbury to form the premix dispersion may vary within a wide range to prove a coatable rubber-based adhesive formulation. It may, for example, be on the order of 35 to 75%.

In general, the proportions of partially crosslinked rubber in the total rubber blend will vary inversely to the percentage of crosslinking, i.e. the greater the percentage of crosslinking within the above-noted 35-75% range, the lesser amount of pre-crosslinked rubber is required in the premix. While the determination of the precise amounts which may be desired for optimum results will be within the expected judgment of the skilled worker in the light of this description, in general it may be said that the amount of partially crosslinked rubber to be employed in the premix will be on the order of from about 8 to about 48%, depending upon the degree of crosslinking, the remainder being virgin butyl or a mixture of virgin butyl and reclaimed rubber.

By way of further illustration, when employing a 55% pre-crosslinked butyl, it has been found that the amount of this pre-crosslinked butyl should be on the order of from about 13 to about 30% by weight of the total rubber blend.  In other words, the rubber blend in the premix should comprise from about 13 to about 30% by weight partially crosslinked butyl rubber, the reclaimed rubber.

In addition to this rubber blend, the premix will include a tackifier as well as the other components performing specific desired functions heretofore employed in rubber-based adhesive formulations for pipewraps and the like, e.g. antioxidants, bactericides, fillers and the like.

In accordance with an alternate embodiment of the present invention, the initial crosslinking of the rubber is accomplished employing a phenolic resin crosslinking agent in lieu of the p-quinone dioxime crosslinker heretofore employed.  Preferably, the rubber, tackifier, phenolic resin crosslinking agent and the other ingredients of the adhesive composition performing specific desired functions are admixed in a Banbury Mixer (trademark of Farrel Company for internal batch mixers capable of mixing thick, viscous and hard-to-mix materials into a single homogeneous dispersion in a very short period of time to provide a homogeneous mix (hereinafter referred to as the "premix") containing the partially crosslinked rubber.  Preferably, the rubber included in the mixer to be crosslinked by the phenolic resin comprises virgin butyl rubber.  However, it is contemplated that, in lieu thereof, one may employ halogenated butyl rubber or a mixture of virgin butyl and halogenated butyl rubber. Optionally, the rubber blend in the premix may, and preferably will, include reclaimed butyl rubber.

In the preferred embodiment of the novel system of this invention, the premix is then removed from the Banbury and conveyed downstream to a mill where it is mixed with the additional crosslinker required for the in situ further crosslinking, as previously discussed.

Phenolic resin crosslinking agents for rubber are well known in the art and per se comprise no part of this invention.  As a class, they are slower acting than p-quinone dioxime and will not cause the aforementioned "lumping" problem.  Accordingly, any of the phenolic resins per se known and/or employed in the rubber industry may be employed in the practice of this invention. By way of illustration of useful phenolic resins, mention may be made of SP-1045 Resin, SP-1055 Resin, and SP-1056 Resin (Schenectady Chemicals). As stated in the Technical Data sheets of Schenectady Chemical, SP-1045 Resin is a heat-reactive phenolic resin prepared from a methylol, alkyl-substituted phenol, lumpy in form; m.p. 145$^O$F, s.g. 1.05; SP-1055 Resin is a heat-reactive, bromo-methyl alkylated, phenolformaldehyde which does not require an activator and effects complete cures in 10 to 60 minute cycles, at a temperature ranging from 300-350$^O$F; lumpy in form:  m.p. 135$^O$F, s.g. 1.05; methylol content, 11.25%, bromine content, 4.00%; and SP-1056 Resin is a heat-reactive, bromomethyl alkylated phenolic resin, lumpy in form; m.p. 142$^O$F, s.g. 1.05; methylol content, 7.5-11.0%; bromine content, minimum 6%.

The amount of phenolic resin to be employed will vary and will in general be within the expected judgment of the skilled worker. However, it should be from about 3% to about 10% by weight, based upon the weight of the rubber blend in the adhesive mix. [This is frequently expressed in the rubber industry as "phr", e.g. from about 3 to about 10 phr.]

As mentioned, in addition to the rubber blend, the premix will also include a tackifier as well as the other components performing specific desired functional heretofore employed in rubber-based adhesive formulations for pipewraps and the like, e.g. antioxidants, bactericides, fillers and the like.

In a separate mixing step, the premix as described above may then be admixed with an effective amount of a crosslinking agent for the [inground] in situ crosslinking of the primer, primer-adhesive interface and the further crosslinking of the adhesive coating itself, in accordance with the teachings of the Jenkins patent. This crosslinking agent may be any of the per se known rubber crosslinkers, e.g. p-quinone dioxime, p-dinitrosobenzene, a phenolic resin, etc., the preferred being p-quinone dioxime. The amount of crosslinker so employed will vary in accordance with its speed and effectiveness and is accordingly not capable of precise quantitative definition. However, the selection of particular desired amounts will be readily apparent to those skilled in the art in the light of the present description. Accordingly, as used herein and in the appended claims, the term "effective amount" means the amount required to provide the desired inground crosslinking prior to the time in which creep and/or other stability problems of the pipewrap would otherwise occur. By way of further illustration, it has been found that on the order of from about 1.0% to about 3.0% by weight of p-quinone dioxime based upon the total weight of the rubber components of the dispersion is entirely satisfactory.

In the embodiment described above, the crosslinking agent required for the additional crosslinking is incorporated in the adhesive tape itself, following the teachings of the '231 patent. While preferred, it is not essential to do so. The only criticality is that the crosslinker and crosslinking activator be contained separately so as to preclude premature crosslinking prior to applying the tape to the primer-coated pipe. Thus, in lieu of having crosslinker in the adhesive and activator in the primer coating, it is visualized that the order may be reversed so that the activator is contained initially in the adhesive and the crosslinker in the primer. Alternatively, one or the other may be contained in a separate layer or element, e.g. a tie-coat to be applied over the primer, in which event the anti-corrosion coating for the metal pipe may be described as consisting of the adhesive tape adhering to the primer coating through an intermediate tie-coat containing one of the crosslinking and activator components, the other being contained in the adhesive or primer coatings, or both.

The primer mixture to be coated onto the pipe may be prepared in accordance with known procedures, e.g. as described in the aforementioned '231 patent. In general, it will comprise natural rubber and at least one tackifier resin dispersed in an organic solvent. In the preferred embodiment, as stated above, it will also contain the crosslinking activator, e.g. a metal oxide such as lead or zinc oxide.

The following examples shown by way of illustration and not by way limitation the practice of this invention.

## EXAMPLE 1

81.0 lbs. of virgin butyl rubber; 111.0 lbs. of reclaimed butyl rubber; 32.0 lbs. of Kalar 5263 (partially crosslinked virgin butyl rubber); 2.5 pounds of antioxidant, Agerite Stalite S (trademark of R.T. Vanderbilt Company for an octylated diphenylamino composition); 31.0 gms. of bacetericide, salicylanilide; and 70.0 lbs. of a filler, McNamee Clay (a Kaolin soft clay from R.T. Vanderbilt Company) were mixed for about 100 seconds in a Banbury Mixer (ram pressure: 55 psi; rotor speed: 85 rpm; water coolant: 125°F). 110.0 lbs. of additional McNamee Clay and 64.0 lbs. of Indopol H-100 (trademark of Amoco Chemicals for a polybutene tackifier) were then added and mixed for sixty seconds, after which, 86.0 pounds of Escorez 1102 (trademark of Exxon for an aliphatic hydrocarbon tackifier resin having a nominal softening point of 100°C and an acid number of 1 or less) and 66 additional pounds of McNamee Clay were added and mixed for about seventy seconds to yield approximately 620.5 pounds of homogeneous dispersion, the premix for the adhesive coating. This premix was then withdrawn from the Banbury Mixer and mixed with about 3.0 pounds (about 1.3% by weight of the rubber blend) of p-quinone dioxime to provide the adhesive formulation. A layer of this formulation approximately 12 mils thick was then calendered onto a 13 mil polyethylene tape web backing material.

## EXAMPLE 2

Example 1 was repeated, varying the amounts of the ingredients in the three Banbury mixing steps as follows:

| | | |
|---|---|---|
| I | Virgin Butyl Rubber | 74.0 lbs. |
| | Reclaimed Butyl Rubber | 106.0 lbs. |
| | Kalar 5263 | 32.0 lbs. |

| | | |
|---|---|---|
| | Agerite Stalite S | 2.5 lbs. |
| | Salicylanilide | 31.0 gms. |
| | McNamee Clay | 70.0 lbs. |
| II | McNamee Clay | 104.0 lbs. |
| | Indopol H-100 | 61.0 lbs. |
| III | Escorez 1102 | 82.0 lbs. |
| | McNamee Clay | 60.0 lbs. |

## EXAMPLE 3

Example 1 was repeated, changing the amount of Kalar 5263 to about 64 pounds.

## EXAMPLE 4

Example 1 was repeated, changing the amount of p-quinone dioxime to about 2.2 lbs. (1.0% of the rubber blend).

## EXAMPLE 5

Example 1 was repeated, changing the amount of p-quinone dioxime to about 6.6 pounds (3.0% by weight of rubbers).

## EXAMPLE 6

A primer coating was prepared in accordance with the formulation described in the '231 patent, namely by mixing in a Nauta high intensity blender at 150°F the following proportions of ingredients.

| | |
|---|---|
| Natural Rubber (Reclaim) | 2,270 gms. |
| Hydrocarbon Tackifier Resin (Zirex) | 1,906 gms. |

Toluene                                   1,089 gms.
Heptane                                  16,798 gms.
Lead Dioxide
(organo-titantia-treated)          209 gms.


### EXAMPLE 7


Zinc oxide was substituted for lead oxide in Example 6.
Although it was found to be an effective substitute, its reaction
rate in catalyzing the in situ crosslinking was slower.

### EXAMPLE 8


The amounts of the ingredients in the three Banbury mixing
steps as follows:


| I | Virgin Butyl Rubber (Exxon 268) | 139.0 lbs |
| | Reclaimed Butyl Rubber | 47.0 lbs. |
| | Agerite Stalite S | 3.0 lbs. |
| | SP-1055 | 16.0 lbs. |
| | Magnesium Dioxide | 4.0 lbs. |
| | Salicylanilide | 28.0 gms. |
| | Zinc Oxide | 19.0 lbs. |
| | McNamee Clay | 100.0 lbs. |
| | Neoprene WRT | 9.0 lbs. |
| II | McNamee Clay | 100.0 lbs. |
| | Indopol H-100 | 59.0 lbs. |
| III | McNamee Clay | 60.0 lbs. |
| | Escorez 1102 | 93.0 lbs. |
| | TOTAL MIX . . . . . . . . . . . | 649.0 lbs. |

The above premix was removed from the Banbury, held for about five minutes and then milled with about 4.9 lbs. of p-quinone bioxime (about 2.6% by weight of the rubber blend or 0.75% of the total mix) to yield an adhesive formulation which was observed to be smooth, extremely tough, and to posses good elongation. This adhesive formulation was then calendered onto a plurality of polyethylene tape backing of thicknesses ranging from 10.9 mils to 13.0 mils.

### EXAMPLE 9

Example 8 was repeated, varying the amounts as follows:

|     |                                  |              |
| --- | -------------------------------- | ------------ |
|     | Virgin Butyl Rubber (Exxon 268)  | 135.0 lbs    |
|     | Reclaimed Butyl Rubber           | 46.0 lbs.    |
|     | Agerite Stalite S                | 3.0 lbs.     |
|     | SP-1055                          | 16.0 lbs.    |
|     | Magnesium Dioxide                | 4.0 lbs.     |
|     | Salicylanilide                   | 28.0 gms.    |
|     | Zinc Oxide                       | 19.0 lbs.    |
|     | McNamee Clay                     | 100.0 lbs.   |
|     | Neoprene WRT                     | 9.0 lbs.     |
| II  | McNamee Clay                     | 100.0 lbs.   |
|     | Indopol H-100                    | 57.0 lbs.    |
| III | McNamee Clay                     | 52.0 lbs.    |
|     | Escorez 1102                     | 90.0 lbs.    |
|     | TOTAL MIX . . . . . . . . . . .  | 631.0 lbs.   |

It is envisioned that the two alternate embodiments of the present invention may also be employed in combination. That is, the premix may be obtained by incorporating in the Banbury a quantity of partially pre-crosslinked butyl rubber, virgin butyl rubber, optionally reclaimed butyl rubber, a phenolic resin crosslinking agent, as well as the other ingredients of the adhesive mix, e.g. tackifier, filler, antioxcidant, bactericide, etc.

It will be appreciated that if the respective embodiments are so combined, lesser amounts of phenolic resin than those recited previously may be required. However, it is not possible to specify precise amounts as they will in part be determined by the percentage of pre-crosslinked butyl contained in the total rubber mix. In any event, the determination of optimum amounts would require but routine experimentation within the expected judgment of the skilled worker in the light of the foregoing description.

It is accordingly expressly understood that the practice of the present invention as described in the foregoing description in conjunction with a rubber blend including a pre-crosslinked butyl rubber, as heretofore described, is within the scope of the invention as defined in the appended claims.

The primer-adhesive tape system of this invention may be employed as a protective coating in the same manner described in the aforementioned U.S. Patent 4,472,231. To illustrate, the primer mixture is first applied to the surface of a metal pipe to be implanted inground. This may be done either in the factory or over-the-ditch. Prior to implantation, the adhesive tape is overlayered, typically in a helical wrap.

The protective coating thus applied has been found to give comparable satisfactory protection, e.g. against corrosion, and to exhibit comparable stability and resistance to creep to the protective coating system of the '231 patent. Specifically, systems prepared in accordance with the foregoing illustrative examples were found fully to meet the aforementioned shear requirement that after 48 hours conditioning at $85^{\circ}C$, the shear rate will not exceed $10^{-8}$* meters/second.

To recapitulate, however, the present invention is not directed to the task of improved protective coatings over those disclosed in the '231 patent. Accordingly, patentable novelty is not herein predicated upon any allegations of improved results.

Patentable novelty is instead predicated upon improvements in manufacture of a system in a commercially feasible manner which will give comparable satisfactory results.

Since certain changes may be made without departing from the scope of the invention herein described, it is intended that all matter contained in the foregoing description, including the examples, shall be taken as illustrative and not in a limiting sense.

1. A system for providing a protective adhesive wrap for tubular metal articles comprising:

(1) a rubber-based primer coating adapted for and adhering to the surface of said metal article;

(2) a rubber-based adhesive tape adapted to be wrapped around and adhered to said primer-coated metal article, said adhesive tape comprising a backing material containing a rubber-based adhesive coating;

characterized in that said adhesive coating comprises a homogenous blend of tackifier and:

(a) a partially pre-crosslinked butyl rubber and virgin butyl rubber; and/or

(b) virgin butyl rubber partially pre-crosslinked by a phenolic resin crosslinking agent and/or halogenated butyl rubber partially crosslinked by a phenolic resin crosslinking agent;

said system furher being characterized by containing a crosslinking agent and a crosslinking activator adapted for providing in situ crosslinking of said primer coating, said adhesive coating and at the interface between said adhesive and primer primer coating subsequent to wrapping said adhesive tape around said primer-coated pipe.

2. A system according to Claim characterized in that said adhesive blend further includes reclaimed butyl rubber.

3. A system according to any preceding claim characterized in that said crosslinking agent is contained in said adhesive coating.

4. A system according to Claim 3 characterized in that crosslinking agent is p-quinone dioxime.

5. A system according to any preceding claim characterized in that said adhesive coating comprises a homogenous blend of pre-crosslinked butyl rubber, virgin butyl rubber and a tackifier.

6. A system according to Claim 5 characterized in that the percentage of crosslinking in said partially pre-crosslinked butyl rubber is from about 35 to about 75%.

7. A system according to Claim 6 characterized in that the amount of pre-crosslinked butyl rubber in said adhesive coating is from about 8 to about 48% by weight of the total rubber blend in said coating.

8. A system according to any preceding claim characterized in that said primer coating comprises a blend of natural rubber tackifier and said activator.

9. A system according to claim 8 characterized in that said activator is lead oxide or zinc oxide.

10. A system according to any preceding claim characterized in that said backing material for said adhesive coating comprises a polyolefin.

11. A method for applying to tubular metal articles a protective adhesive wrap system comprising a rubber-based primer coating and a rubber-based adhesive tape wherein said primer coating is first applied to the outside surface of said tubular article and, thereafter, overlaying said primer coated article with the adhesive surface of said tape;

characterized in that said system comprises a protective adhesive wrap according to any preceding claim.

12. A method according to Claim 11 characterized in that said adhesive blend is provided by admixing said rubber and tackifier in a Banbury mixer.

13. A method according to Claim 12 characterized by including the further steps of removing said adhesive blend from the Banbury and thereafter incorporating in said blend said crosslinking agent for providing said in situ crosslinking.